# EUROPEAN PATENT APPLICATION

(11) **EP 3 940 860 A1**
(43) Date of publication of application: **19.01.2022**
(21) Application number: 20186263.8
(22) Date of filing: 16.07.2020
(51) Int. Cl.: H01M 10/42, H01M 10/613, H01M 10/63, H01M 10/6568, H01M 10/6566, H01M 10/6552, H01M 10/647, H01M 10/653, H01M 10/6562, H01M 10/0525, F28D 7/16, F28D 7/10

(54) **BATTERY MODULE**

(71) Applicant: ABB Schweiz AG, 5400 Baden (CH)
(72) Inventor: He, Minglong, 5400 Baden (CH); Schuler, Gabriel, 6415 Arth (CH); Gilgen, Alexander, 5507 Mellingen (CH); Troendle, Pirmin, 79761 Waldshut-Tiengen (DE); Castiglioni, Roberto, 8051 Zurich (CH)
(74) Representative: Qip Patentanwälte Dr. Kuehn & Partner mbB

(57) **Abstract**

A battery module (10) comprises a plurality of battery cells (12), each battery cell (12) having a vent (18), which is adapted to open, when an overpressure builds up in the battery cell (12), and to release vent gases from the battery cell (12), and a vent channel system (22) connecting the vents (18) of the battery cells (12) for guiding the vent gases. At least a part of the vent channel system (22) is filled with a fire retardant substance (28), which enters a battery cell (12) through its vent (18) opened by overpressure in the battery cell (12).

## Description

### FIELD OF THE INVENTION

The invention relates to the field of batteries. In particular, the invention relates to a battery module comprising a plurality of battery cells.

### BACKGROUND OF THE INVENTION

The safety of battery modules, in particular of lithium battery modules, is challenged under abusive conditions, as for instance elevated temperature, crushing, penetration, overcharge and overdischarge, short-circuit, etc. Hazards in battery cells may be aggravated in a battery module where quantities of battery cells are connected. The failure of one single battery cell may propagate to the surrounding ones and may result in the failure of the whole battery module.

Thermal runaway propagation in battery modules at the single cell level may be addressed by safety vents, thermal fuses, and shutdown separators. At the battery module level, several safety strategies may be implemented.

In US 9 472 797 B2 and DE 20 2015 009 269 U1, heat shields and flame barriers are used.

CN 205 594 822 U mentions early thermal runaway detection and emergency cooling.

US 9 620 830 B2 describes an advanced cooling system.

US 8 733 465 B1 describes a fluid delivery system for fire extinguishing.

In EP 2 841 171 A1, a use of a fire preventing agent for retarding and/or extinguishing a fire is described.

### DESCRIPTION OF THE INVENTION

Substances emitted from battery cells during a thermal runaway may not only be flammable but also may be harmful to people and environment. Therefore, a better battery module design may be required to manage the thermal energy and toxic substances in a safe and environmentally friendly manner.

It is an objective of the invention to improve the battery safety of a battery module and to reduce the possibility of heat propagation and consequently prevent fire hazards.

This objective is achieved by the subject-matter of the independent claim. Further exemplary embodiments are evident from the dependent claims and the following description.

The invention relates to a battery module comprising a plurality of battery cells, each battery cell having a vent, which is adapted to open, when an overpressure builds up in the battery cell, and to release vent gases from the battery cell. The battery module may be used as electrical energy storage of any mobile device, e.g. an electric vehicle or any stationary application. However, it is also possible that the battery cell arrangement is used in other applications. The battery cells may be Li-ion battery cells. The vent may comprise a foil, a membrane and/or a burst disc which bursts, when the overpressure builds up.

Vent gases may be gases that are generated inside a battery cell during a thermal runaway of the battery cell, i.e. when the battery cell overheats. Vent gases may comprise toxic fluoro-organics and fluoride gases. For example, a considerable amount of HF gas (ca. 2-20 kg) may be emitted in a fire of a 100 kWh Li-ion battery pack.

According to an embodiment of the invention, the battery module comprises a vent channel system connecting the vents of the battery cells for guiding and optionally releasing the vent gases. When the cell venting is activated, the accumulated gases inside a battery cell may burst out at once through the vent of the battery cell and may be gathered and guided by the vent channel system. After the venting, the gathered flammable gases may be released at a desired point. The vent gases may be confined within the vent channel system and/or may be guided to a location outside of the battery module.

According to an embodiment of the invention, at least a part of the vent channel system is filled with a fire retardant substance, which enters a battery cell through its vent opened by overpressure in the battery cell.

A fire retardant substance, which also may be called fire retardant agent, may be a gas or liquid. A fire retardant substance may be a substance that is able to slow down or stop the spread of fire or reduce its intensity. This may be accomplished by chemical reactions with the vent gases. A fire retardant substance may also cool the battery cell and the vent channel system through physical action and/or endothermic chemical reactions.

For example, the fire retardant substance may be an inert gas, such as N₂, may comprise water and/or may comprise a cooling liquid.

The fire retardant substance may comprise gel capsules and/or a gel layer in the vent channel system to extinguish fire. The gel capsules and/or the gel layer may release gases and/or liquids upon the contact with vent gases, which gases and/or liquids also may enter the battery cell.

The vent channel system may be partially or completely filled with the fire retardant substance. The vent channel system may be filled with a gaseous or liquid fire retardant substance.

According to an embodiment of the invention, the fire retardant substance comprises or is a cooling liquid. A cooling liquid may be a liquid, which is also used for cooling the battery cells. The housings of the battery cells may be cooled with the cooling liquid, which may flow through cooling pipes surrounding the housings. A cooling liquid may be water.

According to an embodiment of the invention, the vent channel system is connected with a cooling system of the battery module. The fire retardant substance may be a cooling liquid from the cooling system. The cooling liquid may originate from a cooling system of the battery module. The cooling system may comprise cooling pipes attached and/or surrounding housings of the battery cells and/or a housing of the battery module. The cooling system may comprise a pump for generating a flow of cooling liquid through the cooling system and in particular the cooling pipes.

The vent channel system may be connected via a valve with the cooling system, which valve is opened, when a fire is detected in the battery module. Such a detection may be performed with a temperature sensor and a controller, which evaluates the temperature signal from the temperature sensor. The controller also may actuate the valve then.

It also may be that cooling pipes of the cooling system run through the vent channel system and/or that the cooling system comprises such cooling pipes, which are filled with the cooling liquid during a normal operation of the battery module and which are adapted to open into the vent channel system, when a specific pressure and/or a specific temperature are present.

According to an embodiment of the invention, a cooling pipe is placed within the vent channel system, which cooling pipe is designed to release a cooling liquid, when heated by the vent gases. Local heat introduced of burning vent gases may locally open the cooling pipe. The cooling liquid may be taken from a cooling system for cooling the battery module. The cooling pipe may be connected to the cooling system.

It may be that the vent channel system comprises cooling pipes, which are independent from a cooling system, i.e. which are not connected to the cooling system. Such cooling pipes may be independently pressurized and sealed. Such a cooling pipe may be filled with a specific fire extinguishing liquid, as for instance water or dielectric liquid. The cooling liquid may be under high pressure, such as more than 2 bars.

According to an embodiment of the invention, the cooling pipe comprises an exterior pipe and an interior pipe arranged inside the exterior pipe. The cooling pipe may comprise two, for example concentrically arranged pipes. The interior pipe may contain a fire extinguishing liquid, which may be under high pressure. The exterior pipe may seal the interior pipe.

According to an embodiment of the invention, the interior pipe comprises holes for releasing the cooling liquid into the exterior pipe. The holes may be located above the vents of the battery cell and/or may act as extinguishing nozzles. The inner pipe may be equipped with small holes above the location of the vent acting as extinguishing nozzles.

According to an embodiment of the invention, a melting point of a material of the interior is higher than an expected vent gases temperature. A melting point of a material of the exterior pipe may be lower than the expected vent gases temperature. The interior pipe may be made of steel. The exterior pipe may be made of aluminum, which may melt at lower temperatures.

According to an embodiment of the invention, the holes are located above the vents of the battery cells and/or are designed as extinguishing nozzles.

According to an embodiment of the invention, the vent channel system comprises at least one safety vent for releasing vent gases to an outside of the vent channel system. The safety vent may be positioned at an outlet of the vent channel system. The safety vent may be a membrane and/or burst disc adapted for bursting, when a specific pressure is reached. The safety vent may open at a higher pressure as the pressure, which opens the vent.

According to an embodiment of the invention, the safety vent may be arranged opposite to the vent of the respective battery cell. The vent gases may enter the vent system at vent heads of the vent channel system, which are used for connecting the vent system to the battery cells. These vent heads also may provide the safety vent.

According to an embodiment of the invention, the vent channel system comprises vent heads and vent channels. Each vent head, a respective vent channel and a respective vent are connected in a sealed manner to one another. The vent channels may interconnect the vent heads.

The vent head for a battery cell may be sealed to the vent of the battery cell. The vent head may receive the vent gases and may distribute them to one or more vent channels connected to the vent head. Also the connection between a vent head and a vent channel may be sealed, such that no vent gases may leave the interconnection.

The vent heads and/or the vent channels may be made of sheet metal. The vent channels may be made of metal pipes.

According to an embodiment of the invention, each vent head comprises a connection part, the connection part having an opening covering the respective vent and a closure plate for separating the part of the vent channel system filled with the fire retardant substance from the opening.

The connection part may be a part of the vent channel system, which is not filled with a fire retarding substance. The part of the vent channel system on the other side of the connection part may be completely filled with the fire retarding substance. The connection part on the one side may be sealed by the vent of the battery cell and may be sealed on the other side by the closure plate.

A sealing ring may be arranged between the opening and the battery cell for sealing the interconnection between the vent head and the battery cell.

In general, the closure plate may open at a specific overpressure pressure, which is caused by the vent gases in the connection part. The pressure, at which the closure plate opens, may be higher than the pressure at which the vent opens. The pressure, at which the closure plate opens, may be lower than the pressure at which the safety vent opens.

According to an embodiment of the invention, the closure plate is adapted to burst by an overpressure caused by vent gases leaving the battery through the vent. The closure plate may comprise a membrane or burst disc. The closure plate may irreversibly open.

According to an embodiment of the invention, the closure plate is pressed with a spring member against the connection part for releasing vent gases leaving the battery through the vent for releasing the fire retard and substance into the connection part and the battery cell, when a specific overpressure of the vent gases is reached. The closure plate may reversibly open.

According to an embodiment of the invention, the closure plate is fire resistant. This may prevent the closure plate from opening and/or bursting, when the pressure in the connection part is lower than desired.

It also may be that the closure plate is designed to open, when a specific temperature is reached. For example, the closure plate is made of aluminum. In some cell failures, the vent does not open, but the temperature increases, which still may cause a thermal propagation.

According to an embodiment of the invention, an opening of the vent channel system, which heads towards the vent, is sealed with a sealing material. Such a sealing material may be a membrane and/or burst disc. The sealing material may be provided additionally to the vent and/or additionally to the closure plate, for example to protect the vent channel system during installation.

According to an embodiment of the invention, an electrical and/or thermal isolator is provided between the vent channel system and the battery cells. Additionally or alternatively, thermal insulators are provided between battery cells and/or between groups of battery cells. Such insulators may be made of sheets of thermally insulating material. The isolator may protect the outer part of the battery from the heat of vent gases in the vent channel system.

These and other aspects of the invention will be apparent from and elucidated with reference to the embodiments described hereinafter.

### BRIEF DESCRIPTION OF THE DRAWINGS

Fig. 1 schematically shows a perspective view of a battery module according to an embodiment of the invention.
Fig. 2 and 3 schematically show exploded views of a battery cell with a vent head for a battery module according to an embodiment of the invention.
Fig. 4 schematically shows a vent channel system for a battery module according to an embodiment of the invention.
Fig. 5 to 8 schematically show cross-sectional views of a battery cell with a vent head for a battery module according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

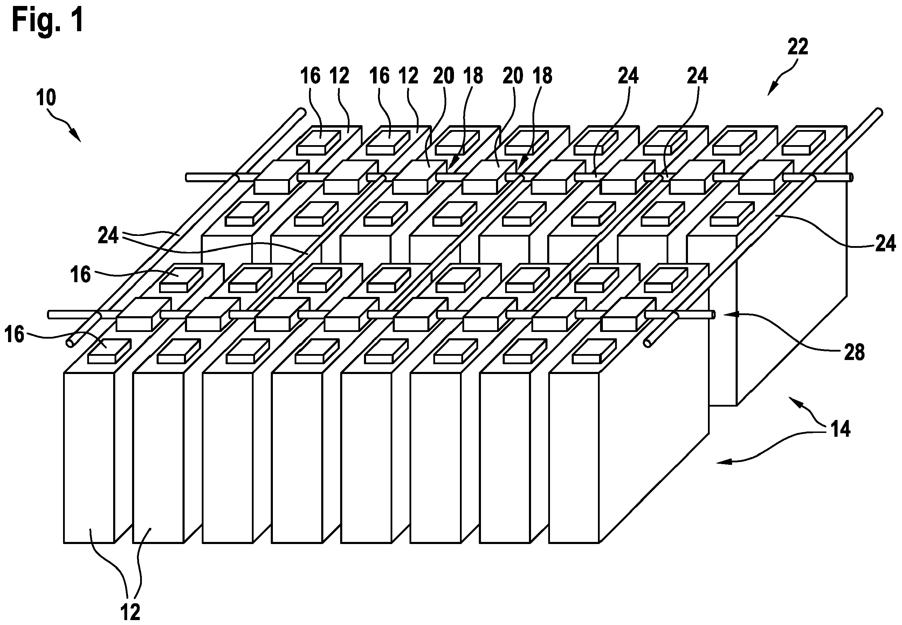

Fig. 1 schematically shows a battery module 10 comprising a plurality of battery cells 12 arranged side by side adjacent to one another in one or more rows 14. As shown, the battery cells 12 may be prismatic cells and/or may have two electrodes 16 on an upper side. These electrodes may be connected. However, this is not shown in Fig. 1. The battery cells 12 may be Li-ion battery cells.

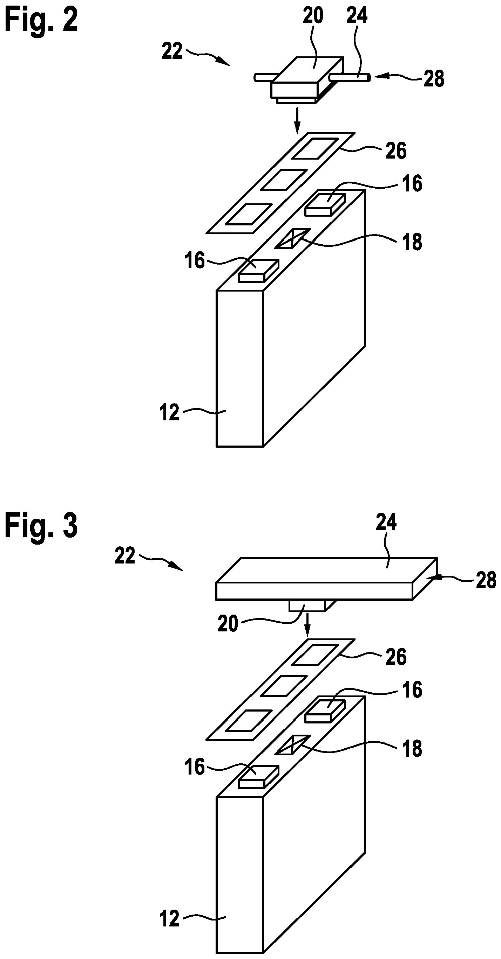

Each battery cell 12 has a vent 18 surmounted by a vent head 20 positioned at the upper side of the battery cell 12. The respective vent 18 is not shown in Fig. 1, but is depicted in Fig. 2 and the following figures. The vents 18 are adapted to open, when an overpressure builds up in the respective battery cell 12, and to release vent gases from the battery cell 12.

The battery module 10 comprises a vent channel system 22 comprising the vent heads 20 for connecting the vents 18 of the battery cells 12 and vent channels 24 for guiding and releasing vent gases. The vent channels 24 interconnect the vent heads 20.

A respective vent channel 24 is sealingly connected with the respective vent head 20, which in turn is connected to a respective vent 18 in a sealed manner.

In the embodiment of Fig. 1, there are vent channels 24 connecting the vent heads 20 of each row 14. There are further vent channels 24 interconnecting vent heads 20 of different rows, which run transversely to vent channels 24 connecting the vent heads 20 of a row 14.

Fig. 2 and 3 show a battery cell 12 and the part of the vent channel system 22 with the vent head 20 connected to the vent 18 of the battery cell 12 and a vent channel 24. The vent head 20 may be made of sheet metal and may have a larger cross-section as the vent channel 24 as shown in Fig. 2.

As shown in Fig. 2, the vent channel 24, which may be a metal pipe, and the vent head 20 may be sealingly connected by welding. As shown in Fig. 3, the vent channel 24 and the vent head may be made from one piece, for example from sheet metal.

An electrical and/or thermal isolator 26 may be provided between the vent channel system 22 and the battery cells 12. This may be provided by an isolation layer, for example made of a foil, which covers an upper side of the battery cell 12 and/or surrounds the vent head 20.

As indicated in Fig. 1-3, the vent channel system 22 is filled with a fire retardant substance 28, such as an inert gas or a liquid, for example water.

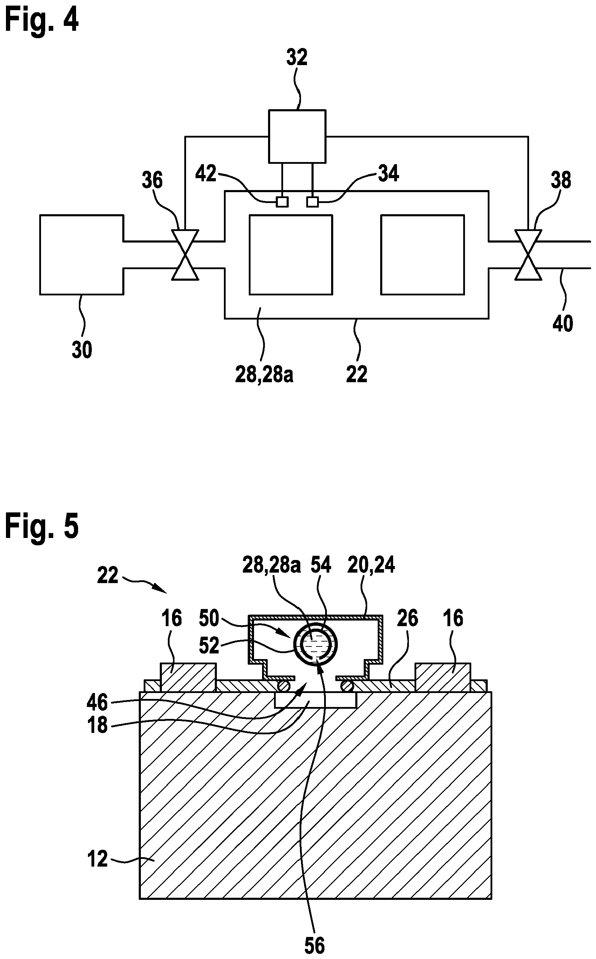

Fig. 4 shows a vent channel system 22, which is connected to a cooling system 30 of the battery module 10. The cooling system 30 may comprise cooling pipes, which for example are attached to a housing of the battery cells 12 and a pump for generating a cooling liquid flow in these cooling pipes. The fire retardant substance 28 in the vent channel system 22 is the cooling liquid 28a from the cooling system 30.

When a fire is detected in the battery module 10, the cooling liquid 28a may be released into the vent channel system 22. A controller 32 may receive a temperature signal from a temperature sensor 34 in the vent channel system 22 and may determine, whether there is a fire in the vent channel system 22. Such a decision may be made, when a temperature in the vent channel system 22 is higher than a threshold. The controller 32 then may open a valve 36 between the vent channel system 22 and the cooling system 30, such that cooling liquid 28a flows into the vent channel system 22.

There also may be a valve 38 in an outlet 40 of the vent channel system 22, which may be controlled by the controller 32. For example, the valve 38 may be opened, when a pressure signal from a pressure sensor 42 is higher than a threshold.

Fig. 5-8 show cross sections of the battery module 10 through a battery cell 12 and a vent head 20 and/or the vent channel 24 above the battery cell 12.

Fig. 5 shows that the vent head 20 is sealingly connected to the vent 18 via a sealing O-ring 44. The O-ring 44 surrounds an opening 46 of the vent head 20 towards the vent 18. Through the opening 46, the vent gases leaving the battery cell 12 through the vent 18 are entering the vent channel system 22.

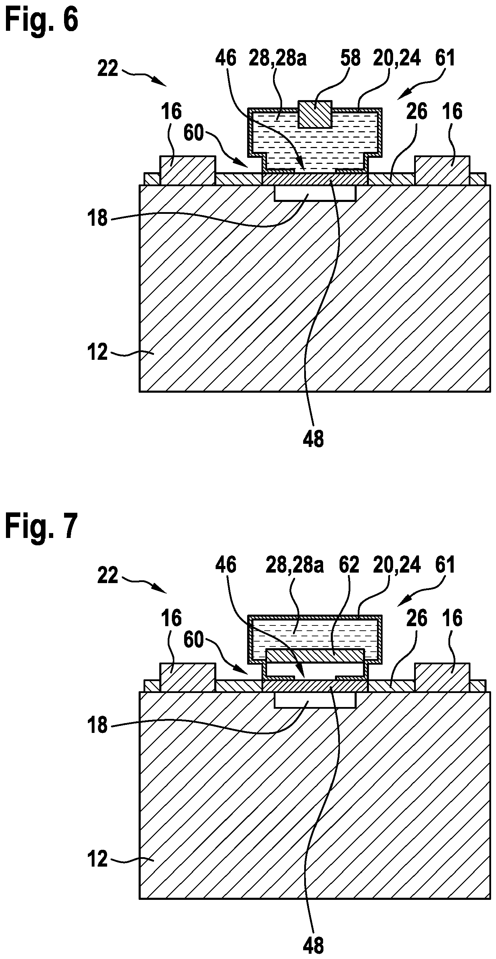

Fig. 6 to 8 show that alternatively or additionally to the O-ring 44, the opening 46 of the vent head 20, which heads towards the vent 18, is sealed with a sealing material 48. The sealing material 74 may be a polymeric membrane and/or metal membrane and/or foil, which may be directly welded to the vent head 20. By an overpressure caused by vent gases leaving the vent 18, the sealing material 48 breaks to guide vent gases to the vent channel 24.

Fig. 5 shows that a cooling pipe 50 is arranged inside the vent channel system 22. The cooling pipe 50 may run through one or more vent channels 24 and also through one or more vent heads 20. The cooling pipe 50 is filled with a fire retardant substance 28.

It may be that the cooling pipe 50 is connected to the cooling system 30, for example, such as shown in Fig. 3 and/or that the fire retardant substance 28 is a cooling liquid.

It also may be that the cooling pipe 50 is completely sealed and/or that the fire retardant substance 28 is filled under pressure into the cooling pipe 50.

The cooling pipe 50 is designed to release the fire retardant substance 28, when heated by vent gases. The cooling pipe 50 comprises an exterior pipe 52 and an interior pipe 54 arranged inside the exterior pipe 52. The interior pipe 54 and the exterior pipe 52 may extend along one another. The interior pipe 54 comprises holes 56 for releasing the fire retardant substance 28 into the exterior pipe 52. The melting point of the material of the interior pipe 54 is higher than an expected temperature of the vent gases, whereas the melting point of a material of the exterior pipe 52 is lower than the expected vent gas temperature. For example, the interior pipe 54 is made of steel and the exterior pipe 52 is made of aluminum.

The hole 56 may be located above the vent 18 and may act as extinguishing nozzle, which sprays the fire retardant substance 28 towards the vent 18.

Fig. 6 shows that the vent channel system 22 may comprise a safety vent 58 for releasing vent gases to an outside of the vent channel system 22. A safety vent 58 may be provided by a vent head 20, for example opposite to the vent 18 of the respective battery cell 12.

In Fig. 6, the vent channel system 22 may be completely filled with a fire retardant substance 28.

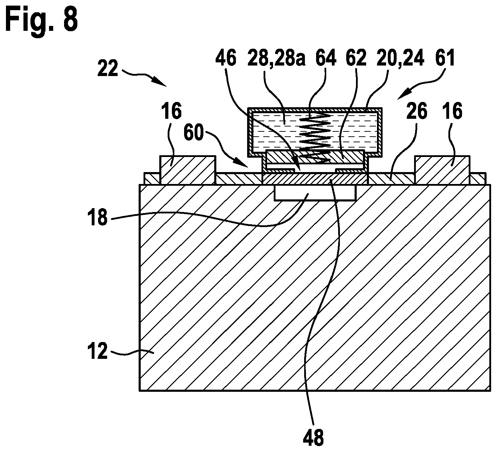

In Fig. 6 (and also Fig. 7 and 8), it may be that the vent channel system 22 and in particular the vent channel 24 and/or the vent head 20 is connected to the cooling system 30, for example, such as shown in Fig. 3. The fire retardant substance 28 may be a cooling liquid 28a. It also may be that the vent channel system 22 is completely sealed and/or that the fire retardant substance 28 is filled under pressure into the cooling pipe 50.

Fire extinguishing may be performed in the following way: Firstly, the sealing material 48, such as a membrane, above the vent 18 is broken, and the fire retardant substance 28, 28a may enter the battery cell 12. Secondly, the safety vent 58 bursts due to a pressure buildup inside the vent channel system 22. The fire retardant substance 28 mixed with the cooled vent gases are then released from the vent channel system 22 to an outside to the battery cell 12. Healthy battery cells 12 and their vent heads 20 may remain in integrity.

In Fig. 6, the vent channel system 22 is completely filled with the fire retardant substance 28.

In Fig. 6, 7 and 8, the vent head 20 comprises a connection part 60, which interconnects a channel part 61 of the vent channel system 22 with the vent 18. The channel part comprises the upper part of the vent head 20 and the vent channels 24. The connection part 60 provides the opening 46, which covers the respective vent 18.

In Fig. 7 and 8, the channel part 61 is filled with the fire retardant substance 28.

In Fig. 7 and 8, a closure plate 62 is provided for separating the channel part 61 of the vent channel system 22 filled with the fire retardant substance 28 from the opening 46. The closure plate 62 may be fire resistant and/or may be adapted for uncovering the opening 46 when a specific pressure in the connection part is reached.

In Fig. 7, the closure plate 62 is adapted to burst by an overpressure caused by vent gases leaving the battery cell 12 through the vent 18. In this case, the closure plate 62 may be made of a specific material, such as a polymer or a foil.

In Fig. 8, the closure plate 62 is pressed with a spring member 64 against the connection part 60 for releasing vent gases leaving the battery cell 12 through the vent 18 for releasing the fire retard and substance 28 into the connection part 60 and the battery cell 12, when a specific overpressure of the vent gases is reached.

It has to be noted that the embodiment of Fig. 3 and/or of Fig. 6 may be combined with the embodiments of Fig. 7 and 8. The embodiments of Fig. 7 and 8 may comprise a safety valve 58 and/or an outlet 40, via which the vent gases mixed with the fire retard and substance 28 can leave the vent channel system 22.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: battery module
- 12: battery cell
- 14: row
- 16: electrode
- 18: vent
- 20: vent head
- 22: vent channel system
- 24: vent channel
- 26: electrical and/or thermal isolator
- 28: fire retardant substance
- 28a: cooling liquid
- 30: cooling system
- 32: controller
- 34: temperature sensor
- 36: valve
- 38: valve
- 40: outlet
- 42: pressure sensor
- 44: O-ring
- 46: opening
- 48: sealing material
- 50: cooling pipe
- 52: exterior pipe
- 54: interior pipe
- 56: hole
- 58: safety vent
- 60: connection part
- 61: channel part
- 62: closure plate
- 64: spring member

## Claims

1. A battery module (10) comprising:
a plurality of battery cells (12), each battery cell (12) having a vent (18), which is adapted to open, when an overpressure builds up in the battery cell (12), and to release vent gases from the battery cell (12);
a vent channel system (22) connecting the vents (18) of the battery cells (12) for guiding the vent gases;
wherein at least a part of the vent channel system (22) is filled with a fire retardant substance (28), which enters a battery cell (12) through its vent (18) opened by overpressure in the battery cell (12).

2. The battery module of claim 1,
wherein the fire retardant substance (28) comprises a cooling liquid (28a).

3. The battery module of claim 1 or 2,
wherein the vent channel system (22) is connected with a cooling system (30) of the battery module (10);
wherein the fire retardant substance (28) is a cooling liquid (28a) from the cooling system (30).

4. The battery module (10) of one of the previous claims,
wherein a cooling pipe (50) is placed within the vent channel system (22);
wherein the cooling pipe (50) is designed to release the fire retardant substance (28), when heated by the vent gases.

5. The battery module (10) of claim 4,
wherein the cooling pipe (50) comprises an exterior pipe (52) and an interior pipe (54) arranged inside the exterior pipe (52);
wherein the interior pipe (54) comprises holes (56) for releasing the fire retardant substance (28) into the exterior pipe (52);
wherein a melting point of a material of the interior pipe (54) is higher than an expected vent gases temperature;
wherein a melting point of a material of the exterior pipe (52) is lower than the expected vent gases temperature.

6. The battery module (10) of claim 5,
wherein the holes (56) are located above the vents (18) acting as extinguishing nozzles.

7. The battery module (10) of one of the previous claims,
wherein the vent channel system (22) comprises at least one safety vent (58) for releasing vent gases to an outside of the vent channel system (22); and/or
wherein the safety vent (58) is provided opposite to the vent (18) of the respective battery cell (12).

8. The battery module (10) of one of the pervious claims,
wherein the vent channel system (22) comprises vent heads (20) and vent channels (24);
wherein each vent head (20), a respective vent channel (24) and a respective vent (18) are connected in a sealed manner to one another;
wherein the vent channels (24) interconnect the vent heads (20).

9. The battery module (10) of one of the previous claims,
wherein each vent head (20) comprises a connection part (60), the connection part (60) having an opening (46) covering the respective vent (18) and a closure plate (62) for separating the part of the vent channel system (22) filled with the fire retardant substance (28) from the opening (46).

10. The battery module (10) of claim 9,
wherein the closure plate (62) is adapted to burst by an overpressure caused by vent gases leaving the battery cell (12) through the vent (18).

11. The battery module of claim 9,
wherein the closure plate (62) is pressed with a spring member (64) against the connection part (60) for releasing vent gases leaving the battery cell (12) through the vent (18) for releasing the fire retard and substance (28) into the connection part (60) and the battery cell (12), when a specific overpressure of the vent gases is reached.

12. The battery module of one of claims 9 to 11,
wherein the closure plate (62) is fire resistant.

13. The battery module (10) of one of the previous claims,
wherein an opening (46) of the vent channel system (22), which heads towards the vent (18), is sealed with a sealing material (48).

14. The battery module (10) of one of the previous claims,
wherein an electrical and/or thermal isolator (26) is provided between the vent channel system (22) and the battery cells (12).

15. The battery module (10) of one of the previous claims,
wherein the battery cells (12) are Li-ion battery cells.
